Europäisches Patentamt

European Patent Office

Office européen des brevets

(19)

(11) **EP 0 721 576 B1**

(12) **EUROPÄISCHE PATENTSCHRIFT**

(45) Veröffentlichungstag und Bekanntmachung des Hinweises auf die Patenterteilung:
**09.07.1997 Patentblatt 1997/28**

(21) Anmeldenummer: **94928850.0**

(22) Anmeldetag: **30.09.1994**

(51) Int Cl.$^6$: **G01K 17/00**

(86) Internationale Anmeldenummer:
**PCT/EP94/03268**

(87) Internationale Veröffentlichungsnummer:
**WO 95/09350 (06.04.1995 Gazette 1995/15)**

(54) **VORRICHTUNG ZUR LEISTUNGSMESSUNG VON LASERSTRAHLUNG**

LASER-POWER MEASUREMENT DEVICE

DISPOSITIF POUR MESURER LA PUISSANCE D'UN RAYONNEMENT LASER

(84) Benannte Vertragsstaaten:
**AT BE CH DE DK ES FR GB GR IE IT LI LU MC NL PT SE**

(30) Priorität: **30.09.1993 LU 88413**

(43) Veröffentlichungstag der Anmeldung:
**17.07.1996 Patentblatt 1996/29**

(73) Patentinhaber: **COMMUNAUTE EUROPEENNE DE L'ENERGIE ATOMIQUE (EURATOM)**
**L-2920 Luxembourg (LU)**

(72) Erfinder: **GEIGER, Franz**
**I-21027 Ispra (IT)**

(74) Vertreter: **Dosterschill, Peter, Dr. et al**
**Patent- und Rechtsanwälte**
**Bardehle-Pagenberg-Dost-Altenburg-**
**Frohwitter-Geissler & Partner**
**Postfach 86 06 20**
**81633 München (DE)**

(56) Entgegenhaltungen:
**DE-A- 3 900 478     US-A- 3 731 099**

## Beschreibung

Die Erfindung betrifft eine Vorrichtung zur Leistungsmessung von Laserstrahlung.

Laserstrahlung, insbesondere $CO_2$-Laserstrahlung, wird für vielfältige Zwecke in der Industrie, der Medizin und der Forschung verwendet. Ein wichtiges Einsatzgebiet ist die Bearbeitung von Werkstoffen, insbesondere von Metallen, mit Hilfe von Laserstrahlung. Die Strahlungsenergie wird beim $CO_2$-Laser über optische Elemente, wie beispielsweise Spiegel, auf Materialoberflächen gelenkt, um diese der Wärmewirkung der Laserstrahlung auszusetzen. Die Laserstrahlung wird kontinuierlich oder in Pulsform in die zu bearbeitende Materialoberfläche eingebracht. Eine Voraussetzung für den praktischen Einsatz der Laserstrahlung im Bereich der Materialbearbeitung ist die Einhaltung einer vorgewählten variablen oder einer konstanten Leistungsabgabe. Beispielsweise sind Kühlsysteme eines von der Firma Rofin Sinar Laser GmbH hergestellten $CO_2$-Lasers mit 5 kW Ausgangsleistung mit einem 5.000 Liter fassenden Wärmespeichertank ausgerüstet, um Temperaturschwankungen des Kühlwassers zu minimieren. Eine Temperaturschwankung des Kühlwassers um 0,5° C würde eine Leistungsänderung am Laser um ca 2% bewirken. Derartige Leistungsänderungen während der Bearbeitung von Werkstücken können zu erheblichen Schäden führen und die bearbeiteten Werkstücke unbrauchbar machen.

Zur Realisierung der hinreichend genauen Einhaltung des Leistungsverlaufs bzw. der Konstanz der Laserstrahlungsleistung wird die Leistung der Laserstrahlung an der letzten Strahl-Austrittsöffnung vor oder nach einem Arbeitsgang überprüft. Die Messung wird beispielsweise kalorimetrisch vorgenommen. Dabei wird eine wärmeisolierte Teilmasse in, insbesondere eine Kupfermasse, mittels Laserpuls um einen Temperaturbetrag $\Delta\vartheta$ aufgeheizt. Im Anschluß wird die Temperaturzunahme der Masse nach Erreichen der isothermischen Temperaturverteilung in der Metallmasse gemessen. Die Leistung der Laserstrahlung wird dann nach der folgenden Gleichung bestimmt:

$$N = \frac{m \cdot C \cdot \Delta}{\Delta t}[W]$$

m = Masse in [g]

C = Spez. Wärmekapazität;

$$C_{cu} = 0{,}386 \left[\frac{Ws}{g\ grd}\right]$$

$\Delta\vartheta$ = Temperaturerhöhung [Grad]

$\Delta t$ = Pulszeit [s]

Die Pulszeit kann auch die Zeit sein, in der eine unter einem kontinuierlichen Laserstrahl hindurch wischende Metallmasse vom Laserstrahl getroffen und um $\Delta\vartheta$ erwärmt wird. Dieses Meßverfahren, das von der zuvor erwähnten $CO_2$-Laser-Herstellerfirma durchgeführt wird, ist allerdings mit großen Fehlern behaftet: Idealerweise wird die gesamte vorgegebene Laserstrahlungsenergie durch Absorption des Laserlichtes an der Oberfläche des aufzuheizenden Metallkörpers in den Metallkörper eingebracht; der Wert $\varepsilon$ als Verhältnis zwischen der Energie, die in den Metallkörper eingebracht wird, und der Energie, die insgesamt aufgewendet wird, ist dann 1. Reflexionen des Laserlichtes an der Oberfläche des Metallkörpers verhindern jedoch eine vollständige Absorption und verursachen entsprechende Fehler des Meßverfahrens. Versuche, die Reflexion durch Schwärzung und Aufrauhung der Oberfläche des aufzuheizenden Metallkörpers auf genügend kleine Werte zu bringen, führen zu keinen befriedigenden Ergebnissen. Ein Grund hierfür besteht darin, daß der Körper optisch nicht dauerhaft auf einen Schwärzungsgrad von nahezu 100% zu bringen ist. Nachteile des bekannten Meßverfahrens bestehen auch darin, daß unter der Wirkung der Laserstrahlung, insbesondere bei höheren Leistungsdichten, zum Zwecke der Schwärzung erzeugte Schichten verändert oder aufgetragene Schichten abgelöst werden, so daß die Absorptionskoeffizienten destabilisiert und nicht genügend maximiert werden.

Ziel der Erfindung ist es daher, eine Vorrichtung zur Leistungsmessung von Laserstrahlung anzugeben, die hinreichend genaue Meßergebnisse liefert.

Dies wird bei einer erfindungsgemäßen Vorrichtung mit den Merkmalen des Patentanspruchs 1 gelöst.

Mit der erfindungsgemäßen Vorrichtung wird es ermöglicht, die Laserstrahlung genau an dem Ort zu messen, an dem sonst die Laserstrahlung z.B. zur Materialbearbeitung benutzt wird. Bei der üblichen $CO_2$-Laserleistungsmessung wird ein Teilstrahl direkt hinter dem Laserauskoppelfenster abgezweigt und auf eine Fotozelle gelenkt, die dann ein annähernd leistungsäquivalentes elektrisches Signal abgibt. Diese Anzeige ist ungenau und erfaßt auch nicht Leistungsabschwächungen, die über die optischen Elemente zwischen Auskoppelfenster und der letzten Strahlaustrittsöffnung entstehen. Die Leistungsmessung der Laserstrahlung kann auch bei hohen Leistungsdichten (aufgrund der Pulsung der Laserstrahlung) vorgenommen werden.

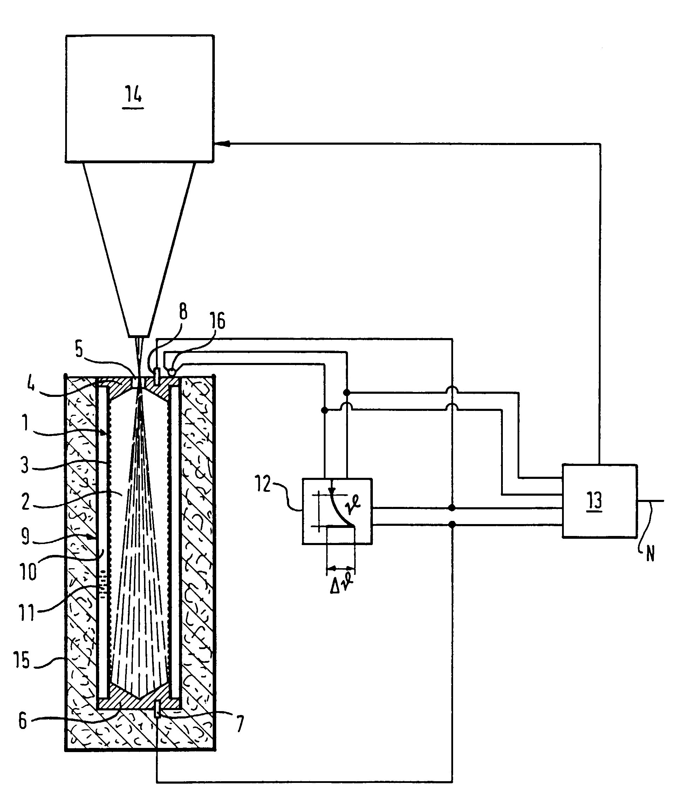

Die Erfindung wird nun anhand der Figur beschrieben, die den konstruktiven Aufbau der Vorrichtung und das Zusammenwirken der einzelnen Komponenten bei der Leistungsmessung von Laserstrahlung darstellt.

Die Vorrichtung besteht aus einem ersten langgestreckten Körper 1, der insbesondere als Zylinder oder Polygonkörper ausgeformt, deren Mantel aus einer metallischen Wandung 3 besteht, die einen Hohlraum 2 bildet. Körper 1 ist ein sogenannter, an sich bekannter "schwarzer Körper". Die Wandung weist eine geringe Dicke von beispielweise 1 mm auf. Sie besteht aus einem gut wärmeleitfähigem Material, vorzugsweise aus Kupfer. An einem ersten Längsende 4 des ersten Körpers 1 ist eine Öffnung 5 angeordnet, die der Aufnahme der Laserstrahlung von einer Vorrichtung dient, die in der Figur oberhalb der erfindungsgemäßen Vorrichtung eingezeichnet ist. Der erste Körper 1 ist an seinem zweiten Längsende 6, das dem ersten Längsende 4 und damit der Öffnung 5 gegenüberliegt, geschlossen. Die Öffnung hat einen Durchmesser, der dem Querschnitt der Laserstrahlung zuzüglich einer Toleranz entspricht. Beispielsweise hat die Öffnung einen Durchmesser von 2 mm.

Ein zweiter langgestreckter Körper 9 umschließt den ersten Körper 1 an seinen Längsseiten und an seinem zweiten Längsende. Der erste und der zweite Körper sind insbesondere als Zylinder, die vorzugsweise koaxial zueinander angeordnet sind, oder als Polygonkörper ausgebildet.

Der erste und der zweite Körper 1, 9 bilden einen Zwischenraum 10, in den ein verdampfbares Wärmeträgermedium 11 einführbar ist. Als Wärmeträgermedium werden beispielsweise Wasser, Alkohol, Azeton oder Kühlmittel verwendet, die in (Haushalts-)-Kühlaggregaten eingesetzt werden. Der Zwischenraum 10 ist ein geschlossener Ringspalt, in den das Wärmeträgermedium eingebracht ist.

Der Hohlraum 2 des ersten Körpers 1 weist mindestens in dem Bereich, der von der Laserstrahlung erfaßt wird, eine schwarze und/oder rauhe Oberfläche auf. Vorzugsweise ist die gesamte Oberfläche des Hohlraums 2 schwarz und/oder rauh, um einen Emissionsgrad bzw. Absorptionsgrad $\varepsilon$ von nahezu 1 herzustellen. Die Schwärzung erfolgt beispielsweise durch Oxidation; die Aufrauhung der Oberfläche erfolgt beispielsweise durch ein Feingewinde oder durch Rändelung.

Das Verhältnis von Länge und Durchmesser des den ersten Körper 1 bildenden Zylinders ist im Hinblick auf hinreichend genaue Meßergebnisse, die Toleranz von Komponenten, die für die Leistungsmessung relevant sind, genügend groß ausgestaltet. Vorzugsweise ist das Verhältnis von Zylinderlänge und Zylinderdurchmesser des ersten Körpers 1 größer 3. Beispielsweise werden als Durchmesser 12 mm und als Länge 90 mm gewählt. Besonders vorteilhaft sind größere Längen, um einen schwarzen Körper zu realisieren.

Der Zwischenraum 10, der durch den ersten und zweiten Körper gebildet wird, weist insbesondere eine Kapillarstruktur auf. Diese Kapillarstruktur führt der metallischen Wandung 3 des ersten Körpers an seiner Außenseite das Wärmeträgermedium zu, ohne daß es besonderer Einrichtungen, wie beispielsweise Pumpen, bedarf.

An beiden Längsenden 4, 6 des ersten Körpers 1 sind Temperaturfühler 7, 8 angeordnet, die insbesondere als Kupfer-Konstantan-Thermopaar ausgebildet sind. Vorzugsweise wird die Kupferkomponente durch die metallische Wandung 3 des ersten Körpers gebildet. Beide Temperaturfühler weisen also einen gemeinsamen Kupferschenkel auf, ihre Eigenzeitkonstanten sind wegen der Art dieser Anbringung praktisch 0. Deren Thermofühler 8, mit dem die Temperatur des Strahlungseintrittsbereichs am ersten Längsende 4 des ersten Körpers 1 gemessen wird, weist ebenfalls, wie der an dem gegenüberliegenden Ende des ersten Körpers 1 angeordnete Temperaturfühler 7, neben dem Kupferdeckel einen mit dem jeweiligen Deckel galvanisch leitend verbundenen Konstantandraht auf. Die beiden Temperaturfühler 7, 8 geben an ihren Ausgängen, die mit einer Einrichtung 12 zur Bildung von Temperaturdifferenzwerten verbindbar sind, in Abhängigkeit der jeweiligen temperatur am Meßpunkt elektrische Ausgangssignale ab, die der Einrichtung 12 zugeführt werden.

Die an den Enden der beiden Konstantandrähte der beiden Temperaturfühler 7, 8 zu messende EMK bzw. elektrische Spannung ist beim Temperaturausgleich, bezogen auf die beiden entgegengesetzten Längsenden 4, 6 des Körpers 1 Null, da die beiden Temperaturfühler 7, 8 in Gegenreihenschaltung geschaltet sind und die entsprechenden beiden Thermospannungen gegeneinander gerichtet sind.

Am ersten Längsende 4 des ersten Körpers 1 ist ferner ein selbständiges Thermoelement 16 angeordnet, das dort die Temperatur $\vartheta$ mißt.

Die über die Öffnung 5 am ersten Längsende 4 des Körpers 1 in die Vorrichtung eintretende Laserstrahlung erhitzt den schwarzen Körper. Der in dem Zwischenraum 10 eingefüllte Wärmeträger verdampft bereits bei einer nur lokalen Erhitzung eines Teils der metallischen Wandung 3 und/oder des Zylinderbodens (zweites Längsende 6 des Körpers 1). An den kälteren Stellen der Innenwandung 3 sowie an der Innenwandung 9 kondensiert der Wärmeträger im Hohlraum 10. Hierzu wird eine relativ schnelle Wärmeausbreitung in der dünnen metallischen Wandung (Masse m) bewirkt. Die mit dem Laserpuls eingebrachte Energie heizt somit den metallischen Körper in relativ kurzer Zeit isotherm auf. Vom Zeitpunkt des Laserpulseintritts bis zum Zeitpunkt des maximalen Temperaturwertes $\vartheta_{max}$ entweicht keine nennenswerte Wärme durch Ableitung, Konvektion oder Abstrahlung aus dem Körper 1, so daß die Temperatur $\vartheta$ kaum vermindert wird.

Bei einsetzendem Wärmetransport von dem Bereich, in dem die Laserstrahlung in dem Hohlraum auftritt, in Richtung des ersten Längsendes mit der Öffnung beginnt der Temperaturausgleich im Körper 1. Die Temperatur im Bereich der Öffnung 5 erreicht im isothermen Zustand des Körpers 1 ihr Maximum und fällt dann wegen der Wärmeverluste langsam ab.

Die Einrichtung 12 ermittelt anhand der zugeführten elektrischen Ausgangssignale der Thermofühler 7, 8 und insbesondere durch Thermofühler 16 die Temperaturerhöhung $\Delta\vartheta$, gegebenenfalls auch die Pulszeit $\Delta t$. Die numerische Berechnung der Laserstrahlungsleistung anhand der gemessenen Temperaturdifferenz sowie der gemessenen Pulszeit, der Masse m des ersten Körpers 1 und des material-spezifischen Wärmekapazitätswertes $C_{cu}$ (wenn der Körper 1 aus Kupfer besteht) wird von einer nachgeschalteten Datenverarbeitungseinrichtung 13 durchgeführt, die insbesondere auch die die Laserstrahlung abgebende Vorrichtung 14 steuert. Die Berechnung erfolgt beispielsweise unter Verwendung der in der Beschreibungseinleitung angegebenen Formel. Der Leistungsmeßwert N ist dann am Ausgang der Datenverarbeitungseinrichtung 13 abgreifbar. Ein typischer Wert ist N=5020W (m=85g, $C_{cu}$=0,356 Ws/g Grad; $\Delta\vartheta$=15,3 Grad; $\Delta t$=100ms). Mit der erfindungsgemäßen Vorrichtung werden ein Absorptionsgrad $\varepsilon$ von über 0,98 und Fehler unter 2% erzielt. Diese Fehlerwerte liegen unter der Meßgenauigkeit der entsprechenden Meßgeräte. Diese Werte werden mit der bisher angewandten Methode nicht erreicht.

Der erste Körper 1 ist im Bereich seiner Öffnung 5, durch die die Laserstrahlung hindurchtritt, mit dieser zuletzt genannten Vorrichtung, die die Laserstrahlung abgibt, ankoppelbar, so daß die Laserstrahlung an einer vorgegebenen Position, nämlich im Bereich der Öffnung 5 und unter einem vorgegebenen Winkel, in den ersten Körper 1 eintritt. Hierzu weist der erste Körper im Bereich seiner Öffnung eine geometrische Form auf, die mit der entsprechenden geometrischen Form der Vorrichtung, die die Laserstrahlung abgibt, korrespondiert. Insbesondere ist der erste Körper 1 im Bereich der Öffnung 5 an seiner Außenseite konisch ausgeformt. Die Vorrichtung, die die Laserstrahlung abgibt, weist im Bereich ihrer Strahlungsaustrittsöffnung eine korrespondierende konische Form auf. Die Vorrichtung 1 läßt sich damit präzise an die die Laserstrahlung abgebende Vorrichtung ankoppeln.

Die erfindungsgemäße Vorrichtung läßt sich mit Hilfe eines Schwenkarms, der elektropneumatisch oder elektromechanisch gesteuert wird, in die entsprechende Meßposition bringen.

Die Vorrichtung wird gut wärmeisoliert und ist z.B. in einem Behälter 15 angeordnet. Der Behälter 15 hat gute wärmeisolierende Eigenschaften und ist beispielsweise mit extrudiertem Polystyrol, Sigrapor oder Glaswolle gefüllt.

Bezugszeichenliste

1    Erster Körper
2    Hohlraum
3    Metallische Wandung von 1
4    Erstes Längsende von 1
5    Öffnung in 3
6    Zweites Längsende von 1
7    Temperaturfühler an 6
8    Temperaturfühler an 5
9    Zweiter Körper
10   Zwischenraum zwischen 1 und 9
11   Wärmeträgermedium

12   Einrichtung zur Bildung von Temperaturdifferenzierungswerten
13   Datenverarbeitungseinrichtung
14   Vorrichtung zur Abgabe der Laserstrahlung
15   Wärmeisolierender Behälter
16   Temperaturfühler Kupfer-Konstantan (selbständiges Thermoelement zur Messung von $\vartheta$)

**Patentansprüche**

1. Vorrichtung zur Leistungsmessung von Laserstrahlung, wobei vorhanden sind:

   ein erster langgestreckter Körper (1), der einen Hohlraum (2) bildet und aus einer metallischen Wandung (3) gut wärmeleitenden Materials geringer Dicke besteht, der an einem ersten Längsende (4) eine Öffnung (5) zur Aufnahme der Laserstrahlung aufweist, der in seinem Hohlraum (2) mindestens in einem von der Laserstrahlung erfaßten Bereich eine schwarze und/oder rauhe Oberfläche aufweist, und der an seinem ersten Längsende (4) und an seinem zweiten Längsende (6) je einen Temperaturfühler (7; 8; 16) aufweist, der jeweils mit einer, elektrische Ausgangssignale der Temperaturfühler (7, 8, 16) verarbeitenden Einrichtung verbindbar ist,
   ein zweiter langgestreckter Körper (9), der den ersten Körper (1) an seinen Längsseiten und an seinem zweiten Längsende (6) umschließt und mit dem ersten Körper (1) einen Zwischenraum (10) bildet, in den ein verdampfbares Wärmeträgermedium (11) einführbar ist.

2. Vorrichtung nach Anspruch 1, dadurch gekennzeichnet, daß der erste und zweite Körper (1, 9) aus Kupfer oder gut wärmeleitendem Material bestehen.

3. Vorrichtung nach einem der vorstehenden Ansprüche, dadurch gekennzeichnet, daß die Temperaturfühler (7, 8, 16) als Kupfer-Konstantan-Thermopaare oder als Thermopaare ausgebildet sind, die sich mit einem anderen, mit Kupfer nicht identischen gut wärmeleitendem Metall, aus dem der erste und zweite Körper (1, 9) bestehen, kombinieren lassen.

4. Vorrichtung nach einem der vorstehenden Ansprüche, dadurch gekennzeichnet, daß der erste und der zweite Körper (1, 9) als Zylinder oder Polygonkörper ausgeführt ist.

5. Vorrichtung nach Anspruch 4, dadurch gekennzeichnet, daß das Verhältnis von Länge des Körpers 1 zu Durchmesser größer 3 ist.

**6.** Vorrichtung nach einem der vorstehenden Ansprüche, dadurch gekennzeichnet, daß der Zwischenraum (10) eine Kapillarstruktur aufweist.

**7.** Vorrichtung nach einem der vorstehenden Ansprüchen, dadurch gekennzeichnet, daß das erste und zweite Längsende (4, 6) des ersten Körpers (1) in seinem Hohlraum (2) konisch ausgebildet ist.

**8.** Vorrichtung nach Anspruch 7, dadurch gekennzeichnet, daß der Konus am zweiten Längsende (6) einen Winkel von 120° aufweist.

**9.** Vorrichtung nach Anspruch 6 oder 7, dadurch gekennzeichnet, daß der Konus am ersten Längsende (4) einen Winkel von etwa 100° aufweist.

**10.** Vorrichtung nach einem der vorstehenden Ansprüche, dadurch gekennzeichnet, daß der erste Körper (1) im Bereich der Öffnung (5) zur Aufnahme der Laserstrahlung mit einer Vorrichtung (14) ankoppelbar ist, die die Laserstrahlung abgibt, und daß der erste Körper (1) und die die Laserstrahlung abgebende Vorrichtung (14) korrespondierende geometrische Formen aufweisen.

**11.** Vorrichtung nach Anspruch 11, dadurch gekennzeichnet, daß der erste Körper (1) im Bereich der Öffnung (5) zur Aufnahme der Laserstrahlung an seiner Außenseite konisch ausgeformt ist und daß die die Laserstrahlung abgebende Vorrichtung (14) im Bereich der Laserstrahlungsabgabe eine korrespondierende konische Form aufweist.

**12.** Vorrichtung nach einem der vorstehenden Ansprüche, dadurch gekennzeichnet, daß die Vorrichtung in einem wärmeisolierenden Behälter (15) gelagert ist.

**Claims**

**1.** Apparatus for power measurement of laser irradiation comprising:

a first elongate body (1) forming a hollow space (2) and being comprised of a metallic wall (3) consisting of a material of small thickness and good thermal conductivity, said body having an opening (5) for receiving the laser irradiation on a first longitudinal end (4) thereof, a black and/or rough surface at least in an area covered by the laser irradiation in the hollow space (2) thereof, and a heat detector (7; 8; 16) each on the first longitudinal end (4) and a second longitudinal end (6) thereof, said heat detector being respectively adapted to be coupled to a means processing electrical output signals of the heat detectors (7, 8, 16),
a second elongate body (9) surrounding the first body (1) on the longitudinal sides and on the second longitudinal end (6) thereof and, together with said first body (1), forming an intermediate space (10) wherein a vaporable heat transfer medium (11) can be inserted.

**2.** Apparatus according to claim 1, characterized in that the first body and the second body (1, 9) consist of copper or a material of good thermal conductivity.

**3.** Apparatus according to any one of the preceding claims, characterized in that the heat detectors (7, 8, 16) are formed as copper-constantan thermocouples or as thermocouples allowing to be combined with a different metal of good thermal conductivity which is not identical with copper and of which the first body and the second body (1, 9) are comprised.

**4.** Apparatus according to any one of the preceding claims, characterized in that the first body and the second body (1, 9) are formed as cylinders or polygonal bodies.

**5.** Apparatus according to any one of the preceding claims, characterized in that the ratio between the length of the body (1) and its diameter is greater 3.

**6.** Apparatus according to any one of the preceding claims, characterized in that the intermediate space (10) has a capillary structure.

**7.** Apparatus according to any one of the preceding claims, characterized in that the first and the second longitudinal end (4, 6) of the first body (1) in the hollow space (2) thereof are conically formed.

**8.** Apparatus according to claim 7, characterized in that the cone on the second longitudinal end (6) has an angle of 120°.

**9.** Apparatus according to claim 6 or 7, characterized in that the cone on the first longitudinal end (4) has an angle of approx 100°.

**10.** Apparatus according to any one of the preceding claims, characterized in that the first body (1), in the area of the opening (5) for receiving the laser irradiation, can be coupled to an installation (14) emitting the laser irradiation and that the first body (1) and the installation (14) emitting the laser irradiation have corresponding geometrical shapes.

**11.** Apparatus according to claim 10, characterized in that the first body (1), in the area of opening (5) for receiving the laser irradiation, is conically formed on the outside thereof and that the installation (14) emitting laser irradiation has a corresponding conical form in the area of the laser irradiation emission.

**12.** Apparatus according to any one of the preceding claims, characterized in that the apparatus is supported in a heat insulating container (15).

## Revendications

**1.** Dispositif pour mesurer la puissance d'un rayonnement laser, dans lequel sont prévus :

un premier corps allongé (1), qui forme une cavité (2) et est constitué par une paroi métallique (3) formée d'un matériau bon conducteur de la chaleur et possédant une faible épaisseur, et qui possède, au niveau d'une première extrémité longitudinale (4) une ouverture (5) servant à recevoir le rayonnement laser, et qui comporte, dans sa cavité (2), au moins dans une zone atteinte par le rayonnement laser, une surface noire et/ou rugueuse, et qui comporte, au niveau de sa première extrémité longitudinale (4) et au niveau de sa seconde extrémité longitudinale (6), des capteurs respectifs de température (7;8;16), qui peuvent être reliés chacun à un dispositif traitant des signaux électriques des capteurs de température (7,8,16), un second corps allongé (9), qui entoure le premier corps (1) au niveau de ses côtés longitudinaux et au niveau de sa seconde extrémité longitudinale (6), et forme, ave le premier corps (1), un espace intercalaire (10), dans lequel peut être introduit un fluide caloporteur (11) pouvant être vaporisé.

**2.** Dispositif selon la revendication 1, caractérisé en ce que les premier et second corps (1,2) sont réalisés en cuivre ou en un matériau bon conducteur de la chaleur.

**3.** Dispositif selon l'une des revendications précédentes, caractérisé en ce que les capteurs de températures (7,8,16) sont réalisés sous la forme de thermocouples en cuivre-constantan ou sous la forme de thermocouples qui peuvent être combinés avec un autre métal qui n'est pas du cuivre et est bon conducteur de la chaleur et dont sont formés les premier et second corps (1,9).

**4.** Dispositif selon l'une des revendications précédentes, caractérisé en ce que les premiers et second corps (1,9) sont agencés sous la forme de cylindres ou de corps polygonaux.

**5.** Dispositif selon la revendication 4, caractérisé en ce que le rapport de la longueur du corps (1) au diamètre est supérieur à 3.

**6.** Dispositif selon l'une des revendications précédentes, caractérisé en ce que l'espace intercalaire (10) possède une structure capillaire.

**7.** Dispositif selon l'une des revendications précédentes, caractérisé en ce que les première et seconde extrémités longitudinales (4,6) du premier corps (1) sont réalisées avec une forme conique dans la cavité (2) du corps.

**8.** Dispositif selon la revendication 7, caractérisé en ce que le cône situé au niveau de la seconde extrémité longitudinale (6) possède un angle de 120°.

**9.** Dispositif selon la revendication 6 ou 7, caractérisé en ce que le cône situé sur la première extrémité longitudinale (4) fait un angle d'environ 100°.

**10.** Dispositif selon l'une des revendications précédentes, caractérisé en ce que le premier corps (1) peut être accouplée, dans la zone de l'ouverture (5) servant à recevoir le rayonnement laser, à un dispositif (14), qui délivre le rayonnement laser, et que le premier corps (1) et le dispositif (14) délivrant le rayonnement laser possèdent des formes géométriques correspondantes.

**11.** Dispositif selon la revendication 10, caractérisé en ce que le premier corps (1) est réalisé avec une forme conique sur sa face extérieure, dans la zone de l'ouverture (5) servant à recevoir le rayonnement laser et que le dispositif (14) délivrant le rayonnement laser comporte, dans la zone de délivrance du rayonnement laser, une forme conique correspondante.

**12.** Dispositif selon l'une des revendications précédentes, caractérisé en ce que le dispositif est monté dans un récipient thermiquement isolant (15).